# FASCICULE DE BREVET EUROPEEN

(11) **EP 2 310 690 B1**
(45) Date de publication et mention de la délivrance du brevet: **16.11.2016**
(21) Numéro de dépôt: 09745777.4
(22) Date de dépôt: 14.05.2009
(51) Int. Cl.: F04D 29/28, F04D 29/30, F01D 5/34, F02C 6/12, F01D 5/14, F02C 3/08

(54) **PALE DE ROUET DE COMPRESSEUR A RACCORDEMENT ELLIPTIQUE EVOLUTIF**
VERDICHTERLAUFRADBLATT MIT VARIABLER ELLIPTISCHER VERBINDUNG
COMPRESSOR IMPELLER BLADE WITH VARIABLE ELLIPTIC CONNECTION

(30) Priorité: 15.05.2008 FR 0853140
(43) Date de publication de la demande: 20.04.2011
(73) Titulaire: Turbomeca, 64510 Bordes (FR)
(72) Inventeur: BILLOTEY, Geoffroy, F-64000 Pau (FR); BISCAY, Pierre, F-64140 Lons (FR); CAZENAVE-LARROCHE, Gilles, F-64320 IDRON (FR); OUSTY, Jean-Philippe, F-64420 Soumoulou (FR)
(74) Mandataire: Balesta, Pierre
(86) Numéro de dépôt international: PCT/EP2009/055815
(87) Numéro de publication internationale: WO 2009/138445

(56) Documents cités:
- DE-B- 1 016 888
- US-A- 5 215 439
- US-A1- 2004 005 220

## Description

La présente invention a trait au domaine des turbines à gaz, telles que celles qui équipent les turbomoteurs d'aéronefs. Elle concerne plus particulièrement l'étage de compression de ces turbines à gaz.

Un étage de compression d'une turbine à gaz comporte généralement un compresseur rotatif destiné à comprimer l'air frais entrant dans la turbine à gaz. Parmi les différents types de compresseurs connus, on distingue les compresseurs de type centrifuge des compresseurs de type axial. Contrairement au compresseur axial, un compresseur centrifuge modifie l'orientation du flux d'air : ce dernier présente généralement, en sortie du compresseur, une orientation sensiblement orthogonale à l'axe de rotation du compresseur, en l'occurrence on accepte une inclinaison du flux d'air (i.e. de la veine d'air en bord de fuite du rouet) comprise entre 0° et environ 30° par rapport à une direction orthogonale à l'axe de rotation du compresseur.

La présente invention vise plus précisément un rouet de compresseur comportant au moins une pale reliée à un moyeu du rouet par un raccordement de forme courbe, ladite pale s'étendant selon une corde définie entre un bord d'attaque et un bord de fuite de la pale.

Classiquement, le flux d'air entrant dans le rouet du compresseur centrifuge vient tout d'abord en contact du bord d'attaque de la pale, puis la longe en suivant sa corde avant de sortir du rouet par le bord de fuite.

Au sens de la présente invention, le raccordement est la ligne géométrique reliant la pale au moyeu, à l'endroit du pied de pale, lequel pied définit la jonction entre la pale et le moyeu. La jonction concerne les deux côtés de la pale, l'intrados et l'extrados.

Lors de son fonctionnement, les pales du rouet du compresseur subissent des contraintes mécaniques importantes qui peuvent, dans certaines circonstances, entraîner leur endommagement (initiation de crique(s), propagation de crique(s), départ d'un fragment de la pale).

L'utilisation d'un raccordement de forme courbe permet dans certains cas et selon la définition de la forme courbe choisie d'améliorer ou de dégrader la tenue mécanique des pales en particulier dans la zone du pied de pale.

Selon la zone de la pale (définie le long de la corde) on peut soit rechercher une amélioration de la tenue mécanique de la pale soit rechercher une dégradation de la tenue mécanique de la pale. C'est notamment le cas pour le bord de fuite du rouet. En effet la dégradation de la tenue mécanique de la pale en bord de fuite du rouet a pour conséquence une amélioration en relatif de la tenue mécanique du disque dans la zone de bord de fuite. Ce cas de figure peut être recherché, en vue de respecter la réglementation. Celle-ci recommande un critère de chronologie de rupture selon lequel, la pale doit rompre avant le disque (moyeu). Autrement dit, la pale fonctionne comme un fusible. Une rupture au niveau du moyeu, du fait de la force centrifuge et de l'inertie du moyeu, une rupture au niveau du moyeu, génèrerait des morceaux de plus forte énergie que ceux générés par une rupture au niveau de la pale. Le bord de fuite du rouet est particulièrement concerné par ce critère dans la mesure où les épaisseurs de pale et de moyeu (voile) sont du même ordre de grandeur dans cette zone.

DE 10 16 888 montre un raccordement entre une pale et un moyeu évoluant le long de la corde.

Un but de la présente invention est de proposer une variante de rouet de compresseur dont la tenue mécanique de la pale diffère le long de la corde.

L'invention atteint son but par le fait que le raccordement présente une forme évoluant de manière continue le long de la corde, le raccordement étant une portion d'une ellipse.

Cette évolution de forme est choisie en fonction de l'évolution de tenue mécanique, au niveau de la pale ou relative entre pale et disque que l'on souhaite obtenir le long de la corde.

Autrement dit, la variation de la forme de la courbe qui constitue le raccordement est continue le long de la corde, grâce à quoi la tenue mécanique de la pale évolue également continûment le long de la corde.

De manière avantageuse, il peut s'agir d'une même ellipse ou bien d'une ellipse dont les petit et grand axes varient lorsque l'on se déplace selon la corde.

Selon une autre variante, le raccordement courbe est constitué de deux portions ayant deux rayons distincts évoluant continûment le long de la corde et s'inversant entre le bord d'attaque et le bord de fuite.

Avantageusement, l'ellipse présente un grand axe et un petit axe, le raccordement étant conformé de telle sorte que, au bord d'attaque, le grand axe de l'ellipse est sensiblement parallèle au flanc de la pale, tandis que, au bord de fuite, le grand axe de l'ellipse est sensiblement perpendiculaire au flanc de la pale.

Cette conformation elliptique à évolution continue présente plusieurs intérêts : un premier intérêt est d'améliorer la tenue mécanique de la pale en son bord d'attaque en gardant une même épaisseur de pale (diminution du coefficient de concentration de contraintes ou Kt dans la zone de raccordement à la pale). Un deuxième intérêt est de réduire l'épaisseur de la pale en son bord d'attaque tout en conservant une même tenue mécanique, grâce à quoi on réduit avantageusement la masse du rouet.

Qui plus est, la réduction de l'épaisseur de la pale en son bord d'attaque permet avantageusement d'améliorer la performance du compresseur.

Un troisième intérêt est de fournir une pale dont la tenue mécanique en son bord de fuite est sensiblement réduite par rapport à une conformation où le raccordement en bord de fuite serait identique à celui en bord d'attaque. En fait, plus précisément on réduit la tenue mécanique relative entre la pale et le voile du moyeu en bord de fuite. Grâce à la présente invention, on diminue la tenue mécanique de la pale (côté petit axe de l'ellipse de raccordement) et simultanément on augmente la tenue mécanique du voile (côté grand axe de l'ellipse de raccordement). Grâce à quoi, le rouet de compresseur selon l'invention peut satisfaire la réglementation mentionnée ci-dessus qui recommande que la pale cède avant le disque du moyeu du rouet.

Un quatrième intérêt est que le raccordement elliptique au bord de fuite, pour lequel le grand axe est sensiblement perpendiculaire au flanc de la pale, permet de diminuer l'intensité du sillage se formant en pied de pale, en conséquence de quoi on améliore encore la performance du compresseur.

De manière préférentielle, le rapport entre le grand axe et le petit axe de l'ellipse est compris entre 1,1 et 4.

De préférence, ce rapport est sensiblement égal à 2. Pour cette valeur, les inventeurs ont constaté une amélioration sensible de la tenue mécanique à épaisseur de pale constante en bord d'attaque, tout en réduisant suffisamment la tenue mécanique de la pale en bord de fuite pour respecter la réglementation en vigueur (Document EASA 'Certification Specifications for Engines', paragraph AMC E 520).

De manière préférentielle, l'évolution du raccordement est réalisée en faisant évoluer continûment les valeurs des axes de l'ellipse.

Ainsi, en parcourant la corde entre le bord d'attaque et le bord de fuite, le petit axe de l'ellipse augmente, tandis que son grand axe diminue, de telle sorte que l'ellipse en bord de fuite correspond à l'ellipse en bord d'attaque, pivotée de 90°.

Autrement dit, en faisant évoluer les axes de l'ellipse le long de la corde, on finit par l'inverser.

L'ellipse de raccordement présente un grand axe le long de la pale et un petit axe le long du moyeu en bord d'attaque et un grand axe le long du moyeu et un petit axe le long de la pale en bord de fuite. De manière plus générale, les valeurs du grand axe et du petit axe peuvent être différentes en bord d'attaque et bord de fuite, leurs valeurs évoluant continûment entre le bord d'attaque et le bord de fuite.

Il s'ensuit que, considérée selon la corde de la pale, la portion de l'ellipse qui constitue le raccordement évolue continûment entre le bord d'attaque et le bord de fuite.

L'invention concerne en outre un compresseur centrifuge comportant un rouet de compresseur conforme à l'invention.

Par compresseur centrifuge, on entend, au sens de l'invention, les compresseurs pour lesquels la direction du flux de gaz sortant est incliné entre 0° et 30° par rapport à une direction orthogonale à l'axe de rotation du rouet.

L'invention vise enfin une turbomachine comprenant un compresseur centrifuge ou du type mixte pour lequel le bord de fuite est incliné par rapport à la direction orthogonale à l'axe de rotation du rouet conforme à la présente invention.

L'invention sera mieux comprise et ses avantages apparaîtront mieux à la lecture de la description qui suit, d'un mode de réalisation indiqué à titre d'exemple non limitatif. La description se réfère aux dessins annexés sur lesquels :
- la figure **1** est une vue générale d'un turbomoteur d'hélicoptère comportant un compresseur centrifuge muni d'un rouet selon l'invention ;
- la figure **2A** est une vue en perspective du rouet de compresseur centrifuge de la figure **1** **;**
- la figure **2B** est une demi-vue en coupe axiale du rouet de la figure **2A** **;**
- la figure **3** est une vue schématique du bord d'attaque d'une pale du rouet de la figure **2A****,** considérée dans un plan orthogonal à la corde de la pale ; et
- la figure **4** est une vue schématique du bord de fuite de la pale de la figure **3****,** considérée dans un plan orthogonal à la corde de la pale.

Le rouet de compresseur selon la présente invention peut être utilisé soit dans un compresseur de type mixte, soit dans un compresseur de type centrifuge. Toutefois, l'invention sera illustrée ici à titre d'exemple à partir d'un compresseur centrifuge d'une turbine à gaz d'hélicoptère.

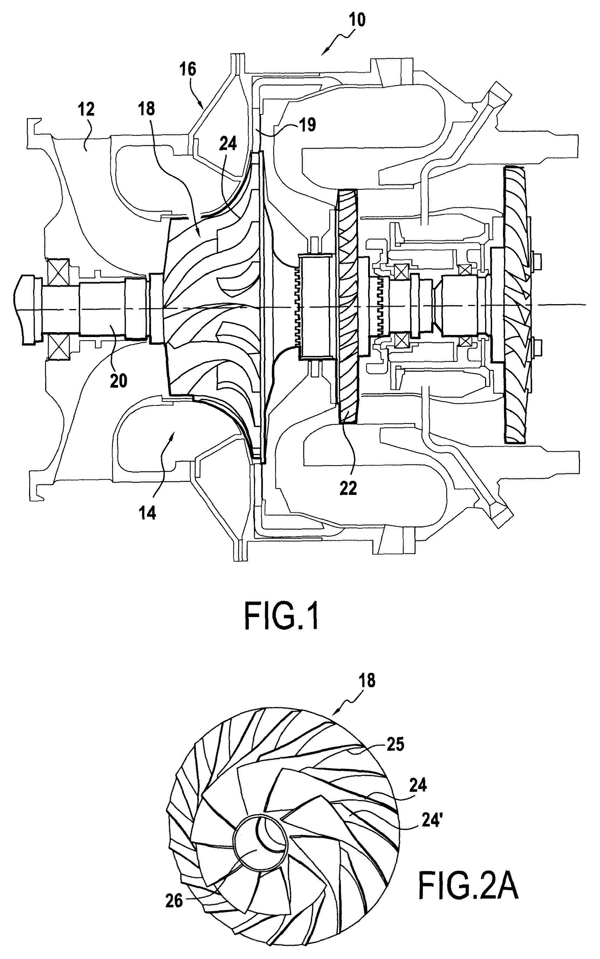

La figure **1** représente une turbine à gaz **10** d'un hélicoptère (non représenté ici), qui comporte une entrée d'air frais **12** pour l'alimentation d'un étage de compression **14.** Ce dernier est en l'espèce constitué par un unique compresseur **16** comportant un rouet **18** et par un diffuseur centrifuge **19** connu par ailleurs.

Le rouet **18** est monté sur un arbre **20** qui est entraîné en rotation par une turbine **22.** Généralement, le rouet **18** est formé en une seule pièce et est obtenu par usinage d'un bloc brut, le plus souvent en titane ou en inconel.

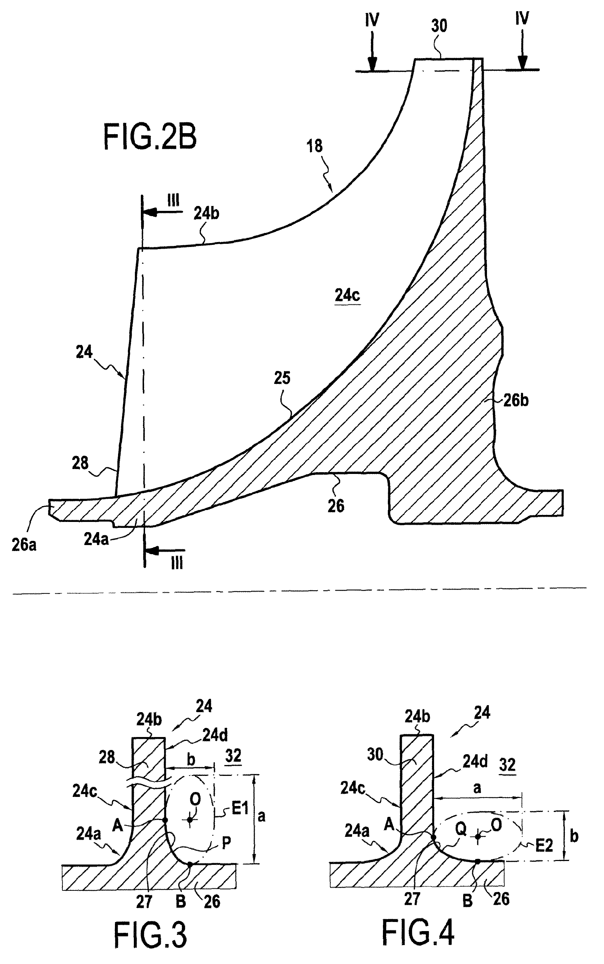

Comme on le voit mieux sur les figures **2A** et **2B****,** le rouet **18** comporte une pluralité de pales principales **24** s'étendant depuis un disque **26a** d'un moyeu **26.** Plus précisément, chacune des pales **24** comprend un corps de pale **24c** s'étendant entre un pied de pale **24a** et un sommet **24b.**

Qui plus est, chacune des pales **24** s'étend selon une corde **25** définie entre un bord d'attaque **28** et un bord de fuite **30.** Le rouet **18** comporte en outre des pales secondaires **24'** plus courtes que les pales principales **24** et dont les bords d'attaque sont reculés par rapport à ceux des pales principales **24.**

Le raccord entre chacune des pales **24** et le moyeu **26** du rouet **18** est réalisé à l'endroit du pied de pale **24a,** selon un raccordement **27** formant une courbe. Ce raccordement correspond à la forme locale du pied de pale joignant le corps de la pale au moyeu **26.**

A l'aide des figures **3** et **4****,** on va maintenant décrire plus en détail le raccordement évolutif conforme à la présente invention.

La figure **3** est une vue schématique en coupe du bord d'attaque **28** de l'une des pales **24,** considérée dans un plan orthogonal à la corde **25.** La vue est schématique car on a représenté ici une pale droite par souci de simplicité, alors que généralement les pales de compresseur centrifuge sont inclinées. De plus les hauteurs de pales en bord d'attaque et bord de fuite, les épaisseurs de pale ou de moyeu sont schématiques et non représentatives.

Comme on le voit sur cette figure, le raccordement **27** du côté intrados **32** présente la forme d'une courbe et, plus précisément, d'une première portion **P** d'une ellipse **E1** qui est représentée ici en pointillés. Cette ellipse appartient donc au plan de la figure **3****.**

On constate que l'ellipse **E1** est tangente au moyeu **26** d'une part, et au flanc **24d** de la pale **24** d'autre part, de sorte que le raccordement **27** est lui-même tangent à la pale **24** et au moyeu **26.**

Par ailleurs, cette ellipse **E1** présente un centre **O,** un grand axe **a** et un petit axe **b** orthogonaux l'un à l'autre.

Selon l'invention, le raccordement **27** est conformé de telle sorte que le grand axe **a** de l'ellipse **E1** est sensiblement parallèle au flanc **24d** de la pale **24** dans la zone du bord d'attaque **28.**

Sur la figure **3****,** le point **A** représente le point de tangence de l'ellipse **E1** avec la pale **24,** tandis que le point **B** représente le point de tangence de l'ellipse **E1** avec le moyeu **26.**

Dans cette conformation du raccordement **27,** il a été constaté que la tenue mécanique de la paie **24** à cet endroit de la corde **25** est particulièrement bonne, par comparaison à une configuration classique avec rayon de raccordement.

Dans le cas où la pale **24** n'est pas orthogonale au moyeu **26,** la première portion **P** de l'ellipse **E1** sera là encore choisie de manière que le raccordement **27** soit tangent au moyeu **26** et au flanc **24d** de la pale **24.**

La figure **4** est une vue schématique en coupe du bord de fuite **30** de la pale **24** de la figure **3****,** considérée dans un plan orthogonal à la corde **25.**

Comme on le voit sur cette figure, le raccordement **27** du côté intrados (et ici aussi de préférence du côté extrados) **32** présente la forme d'une courbe et, plus précisément, d'une deuxième portion **Q** d'une ellipse **E2.** Cette ellipse appartient donc au plan de la figure **4****.** On constate que l'ellipse **E2** correspond à l'ellipse **E1** pivotée de 90°.

L'ellipse **E2** est tangente au moyeu **26** d'une part, et au flanc **24d** de la pale **24** d'autre part, de sorte que le raccordement **27** est lui-même tangent à la pale **24** et au moyeu **26.**

Sur cette figure **4****,** la point **A** représente le point de tangence de l'ellipse **E2** avec la pale **24,** tandis que le point **B** représente le point de tangence de l'ellipse **E2** avec le moyeu **26.**

A la différence de la figure **3****,** le grand axe **a** est sensiblement perpendiculaire au flanc **24d** de la pale **24.** Dans cette conformation du raccordement **27,** la tenue mécanique à cet endroit de la corde **25** est moins bonne que celle au bord d'attaque **28** de la pale **24.**

Il s'ensuit qu'au bord d'attaque (figure 3), la zone située autour du point **A** présente une tenue mécanique améliorée, tandis que la tenue mécanique de la zone située autour du point **B** est diminuée. Cette dernière diminution de tenue mécanique est toutefois sans conséquence car au niveau de bord d'attaque **28,** le moyeu est épais et très peu sollicité.

A l'inverse, au bord de fuite **30** (figure 4), la zone située autour du point **A** présente une tenue mécanique diminuée alors que la zone située autour du point **B** présente une tenue mécanique améliorée.

Ainsi, de manière avantageuse, on obtient à la fois une tenue mécanique en bord d'attaque améliorée **28** (par rapport à une configuration classique avec rayon de raccordement et iso section de passage et une chronologie de rupture (rupture de la pale avant rupture du disque) améliorée en bord de fuite **30.**

Dans le cas où la pale **24** n'est pas orthogonale au moyeu **26,** la deuxième portion *Q* de l'ellipse **E2** sera là encore choisie de manière que le raccordement **27** soit tangent au moyeu **26** et au flanc **24d** de la pale **24.**

De préférence, le rapport entre le grand axe **a** et le petit axe **b** est compris entre 1,1 et 4, en l'occurrence environ 2.

On comprend donc que les figures **3** et **4** représentent la forme du raccordement **27** en deux extrémités de la pale **24,** à savoir en son bord d'attaque **28** et en son bord de fuite **30.**

Entre ces deux positions extrêmes, la forme du raccordement évolue de manière continue, du fait de l'évolution continue des valeurs des axes a, b de l'ellipse afin d'obtenir une transition douce entre deux formes de raccordement sensiblement différentes.

Pour ce faire, le raccordement **27** évolue en faisant évoluer continûment les valeurs des axes de l'ellipse, entre le bord d'attaque **28** et le bord de fuite **30.** Autrement dit, en chaque point de la corde **25,** le raccordement **27** constitue une portion d'une ellipse. Il s'ensuit que l'évolution continue des valeurs des axes de l'ellipse conduit à l'évolution continue du raccordement elliptique **27** le long de la corde.

En tout état de cause, le raccordement **27** est conformé pour être tangent à la fois au flanc **24d** de la pale **24** et au moyeu **26,** et ce en tout point de la corde **25,** à la fois du côté de l'intrados et de l'extrados.

De préférence, pour une même corde, l'ellipse de raccordement de l'extrados est identique à celle de l'intrados.

D'autres avantages liés à la présente invention sont présents ci-après.

En premier lieu, la forme particulière en bord de fuite **30,** telle que représentée sur la figure **4****,** permet avantageusement d'améliorer la tenue à l'érosion du rouet grâce à l'augmentation de la quantité de matière en pied de pale où a lieu l'érosion.

En deuxième lieu, la forme particulière en bord d'attaque **28** (figure 3) permet de réduire le coefficient de concentration de contraintes de telle sorte que les pales **24, 24'** présentent une tenue améliorée face à l'introduction possible de corps étrangers dans le rouet.

En troisième lieu, la conformation du raccordement des pales au rouet permet de diminuer l'épaisseur axiale du voile **26b** du moyeu **26,** grâce à quoi on améliore la durée de vie et la marge à l'éclatement du disque **26a.**

## Revendications

1. Rouet de compresseur (18) comportant au moins une pale (24) reliée à un moyeu (26) du rouet par un raccordement (27) de forme courbe, ladite pale s'étendant selon une corde (25) définie entre un bord d'attaque (28) et un bord de fuite (30) de la pale, le raccordement (27) présentant une forme évoluant de manière continue le long de la corde, **caractérisé en ce que** le raccordement (27) est une portion (P, Q) d'une ellipse (E1, E2).

2. Rouet de compresseur selon la revendication **1, caractérisé en ce que** l'ellipse présente un grand axe (a) et un petit axe (b), le raccordement (27) étant conformé de telle sorte que, au bord d'attaque (28), le grand axe (a) de l'ellipse (E1) est sensiblement parallèle au flanc (24d) de la pale (24), tandis que, au bord de fuite (30), le grand axe (a) de l'ellipse (E2) est sensiblement perpendiculaire au flanc de la pale.

3. Rouet de compresseur selon la revendication **2, caractérisé en ce que** le rapport entre le grand axe (a) et le petit axe (b) est compris entre 1,1 et 4.

4. Rouet de compresseur selon l'une quelconque des revendications **1** à **3, caractérisé en ce que** l'évolution du raccordement (27) est réalisée en faisant évoluer continûment la longueur des axes de l'ellipse.

5. Compresseur centrifuge (16) comportant un rouet selon l'une quelconque des revendications **1** à **4.**

6. Turbomachine (10) comportant un compresseur (16) selon la revendication **5.**

## Patentansprüche

1. Verdichterlaufrad (18), umfassend mindestens ein Blatt (24), das mit einer Nabe (26) des Laufrads durch einen Anschluss (27) von gekrümmter Form verbunden ist, wobei sich das Blatt entlang eines Seils (25) erstreckt, das zwischen einer Vorderkante (28) und einer Hinterkante (30) des Blattes definiert ist, wobei der Anschluss (27) eine Form aufweist, die sich kontinuierlich entlang des Seils entwickelt, **dadurch gekennzeichnet, dass** der Anschluss (27) ein Abschnitt (P, Q) einer Ellipse (E1, E2) ist.

2. Verdichterlaufrad nach Anspruch 1, **dadurch gekennzeichnet, dass** die Ellipse eine große Achse (a) und eine kleine Achse (b) aufweist, wobei der Anschluss (27) derart ausgebildet ist, dass an der Vorderkante (28) die große Achse (a) der Ellipse (E1) im Wesentlichen parallel zur Seite (24d) des Blattes (24) ist, während an der Hinterkante (30) die große Achse (a) der Ellipse (E2) im Wesentlichen senkrecht auf die Seite des Blattes ist.

3. Verdichterlaufrad nach Anspruch 2, **dadurch gekennzeichnet, dass** das Verhältnis zwischen der großen Achse (a) und der kleinen Achse (b) zwischen 1,1 und 4 beträgt.

4. Verdichterlaufrad nach einem der Ansprüche 1 bis 3, **dadurch gekennzeichnet, dass** die Weiterentwicklung des Anschlusses (27) durchgeführt wird, wobei kontinuierlich die Länge der Achsen der Ellipse weiterentwickelt wird.

5. Kreiselverdichter (16), umfassend ein Laufrad nach einem der Ansprüche 1 bis 4.

6. Turbotriebwerk (10), umfassend einen Verdichter (16) nach Anspruch 5.

## Claims

1. A compressor impeller (18) having at least one blade (24) connected to an impeller hub (26) by a junction (27) of curved shape, said blade extending along a chord (25) defined between a leading edge (28) and a trailing edge (30) of the blade, the junction (27) presenting a shape that varies continuously along the chord, **characterized in that** the junction (27) is a portion (P, Q) of an ellipse (E1, E2).

2. A compressor impeller according to claim 1, **characterized in that** the ellipse has a major axis (a) and a minor axis (b), the junction (27) being shaped in such a manner that at the leading edge (28), the major axis (a) of the ellipse (E1) is substantially parallel to the flank (24d) of the blade (24), while at the trailing edge (30) the major axis (a) of the ellipse (E2) is substantially perpendicular to the flank of the blade.

3. A compressor impeller according to claim 2, **characterized in that** the ratio of the major axis (a) to the minor axis (b) lies in the range 1.1 to 4.

4. A compressor impeller according to any one of claims 1 to 3, **characterized in that** the junction variation (27) is carried out by causing the lengths of the axes of the ellipse to vary continuously.

5. A centrifugal compressor (16) including an impeller according to any one of claims 1 to 4.

6. A turbomachine (10) including a compressor (16) according to claim 5.
